Europäisches Patentamt

European Patent Office

Office européen des brevets

(11) Publication number: **0 188 828 B1**

## EUROPEAN PATENT SPECIFICATION

(45) Date of publication of patent specification: **17.06.92**  (51) Int. Cl.5: **G06F 15/62**, G06F 13/40

(21) Application number: **85201819.1**

(22) Date of filing: **08.11.85**

(54) Image processing apparatus and intercommunication bus therefor.

(30) Priority: **21.11.84 US 673960**

(43) Date of publication of application:
**30.07.86 Bulletin 86/31**

(45) Publication of the grant of the patent:
**17.06.92 Bulletin 92/25**

(84) Designated Contracting States:
**DE FR GB NL**

(56) References cited:
**GB-A- 2 137 847**

**COMPUTER DESIGN, vol. 21, no. 8, August 1982, pages 52,54, Winchester, Massachusetts, US; T. WILLIAMS: "Dimensional processing system clears data transfer bottlenecks"**

**COMPUTER DESIGN, vol. 22, no. 8, July 1983, pages 197-200,202,204, Winchester, Massachusetts, US; T.J. COOPER et al.: "System architecture speeds multitasking image processing"**

**INTERFACES IN COMPUTING, vol. 2, no. 1, February 1984, pages 45-68, Elsevier Sequoia, Amsterdam, NL; R. MANNER et al.:**

**"The polybus: a flexible and fault-tolerant multiprocessor interconnection"**

(73) Proprietor: **North American Philips Corporation**
**100 East 42nd Street 9th Floor**
**New York, N.Y. 10017(US)**

(72) Inventor: **Alexandru, Radu**
**c/o INT. OCTROOIBUREAU B.V. Prof. Holstlaan 6**
**NL-5656 AA Eindhoven(NL)**

(74) Representative: **Strijland, Wilfred et al**
**INTERNATIONAAL OCTROOIBUREAU B.V.**
**Prof. Holstlaan 6**
**NL-5656 AA Eindhoven(NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

BACKGROUND OF THE INVENTION

Field of the Invention

This invention pertains to an intercommunication bus apparatus for use in an image processing apparatus, connected to a plurality of device stations, wherein the bus apparatus comprises:
- D data lines for the transfer of data, said data lines constituting a data bus, said data bus being divided into N sub-buses;
- A address lines for addressing data in said device stations;
- V video control lines for video control signals;
- C collision protection lines for collision protection signals;
- a system clock defining time slots for timing system operations;
- means to allocate said sub-buses to from 1 to N processes, such that each process has an independent data path having one or more sub-buses, depending on the throughput requirements of the process. The bus structure provides an interconnection in which multile array processors and memory modules can communicate simultaneously at a very high transfer rate for a given number of bus lines and a given clock rate.

More specifically, the problems and improvements addressed by the present invention reside in the structure, timing and protocol for use on the bus of such image processing apparatus. The bus structure provides an interconnection in which multiple array processors and memory modules can communicate simultaneously at a very high transfer rate for a given number of bus lines and a given clock rate.

Description of the Prior Art

A variety of bus structures are known in the prior art.

For example, from an article in Computer Design Vol. 21 (August 1982) pages 52 and 54 by T. Williams, titled "Dimensional processing system clears data transfer bottle necks", an intercommunication bus apparatus is known with a plurality of device stations interconnected by high speed interchange bus, comprising a data bus and one address bus, wherein the device stations respond individually to addresses on the address bus. The known apparatus has the disadvantage that the data transfer rate is limited to the rate at which addresses are transferred on the address bus. Bus structures for real time video processing to date have a known number of shortcomings. To keep up with the increasing demands of video rate information transfer, a bus architecture must overcome a number of classical drawbacks. One common drawback is the inability of the bus structure to achieve maximum throughput because of the inherent time delay between initiation of a memory read cycle and the availability of valid data at the memory output. In a multimaster environment, occasionally a very complex arbitration process is needed to satisfy conflicting demands for a bus. Furthermore, there is often dead time inherent in the write-to-read transition. Many classic designs require very fast memory which in turn increases the cost of a system. Interface structures in the prior art have become quite complex because of the timing required for data address and control signals.

SUMMARY OF THE INVENTION

The architecture of the bus structure of the present invention is designed to eliminate the various transmission bottlenecks which have occurred in prior art bus designs, such as allowing for a high bit rate, supporting a plurality of master devices being active at the same time, making complex arbitrage operations unnecessary, allowing for a narrow address bus, and in general keeping the apparatus complexity at a low level. The object of the invention is realized by the measures recited in the characterizing part of Claim 1. More particularly, in order to keep up with the demands of video rate information transfer, the architecture utilizes a dual bus system. Two sets of buses are defined. One bus is for low speed control and data transfer and the other for the video rate multiple channel image transfer. In a specific embodiment, a VME bus is used for the computer controlling functions of the imaging boards and a synchronous video bus is designed to support D data bit lines, which are organized into a plurality of B-bit wide paths.

The requirements of digital imaging applications for simultaneous processing lead to a parallel processing architecture. In the present image processing apparatus this is achieved by way of the bus structure having multiple data paths and timing synchronization and accommodating high speed special purpose processors.

The video bus is further decomposed into four functional buses: address selection, data buses, timing and synchronization, and utility and control. This particular distribution of activities removes many bottlenecks and allows for simultaneous image transfers at video rates.

The invention furthermore relates to an intercommunication bus apparatus for use in an image processing apparatus, featuring the above cited improvements. Such bus apparatus can readily be completed by adding necessary modules to function as an image processing apparatus. Further aspects of the invention are recited in dependent Claims.

## BRIEF DESCRIPTION OF THE DRAWINGS

The invention will be further explained with reference to the appended drawings.

Figure 1 is a block diagram of a digital image processing apparatus showing an environment in which the video bus apparatus of the present invention may be used.

Figure 2 illustrates the timing relationship between the system clock and the packet clock of the present invention.

Figure 3 shows the phase of various signal packets with respect to the buffered packet clock.

Figure 4 illustrates the write transfer timing in the present invention.

Figure 5 illustrates a read transfer timing in the present invention.

## DESCRIPTION OF THE PREFERRED EMBODIMENT

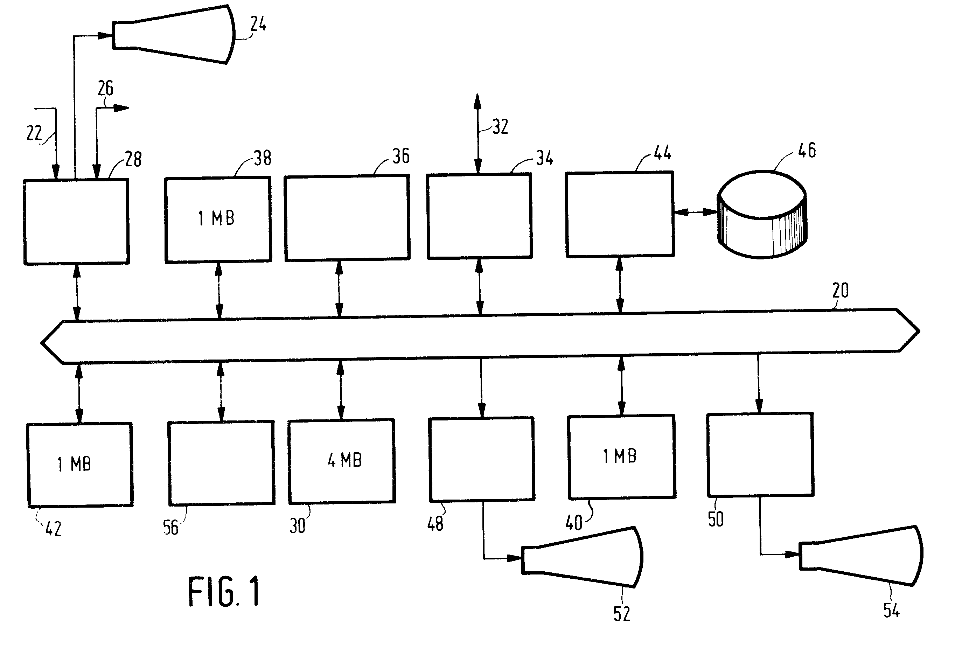

The bus structure of the present invention, designed for an image processing apparatus, provides for rapid processing of images. A typical application is a medical imaging system in which data acquisition, immediate processing and later postprocessing of data from a variety of devices such as CAT scanners, NMR's, radiographic and fluoroscopic instruments is required. Figure 1 is a block diagram illustrating the utilization of the bus of the present invention in such a system, in which large arrays of data must pass through various hardware modules very quickly, up to a video rate. The bus apparatus has a uniform, nondedicated, bidirectional structure.

In the description which follows, a relatively moderate transfer clock frequency is fixed at 9 MHz. A very wide data path does not lend itself to a good utilization in applications such as those considered for image processing. Instead of manipulating large multibit numbers, the bus of the present invention works with multiple, relatively narrow data organized in arrays upon which repetitive operations are to be performed. To do this efficiently, the data path has been partitioned into 16 eight-bit video data sub-buses, each of which may be driven by a different attached module. The data are transferred serially on these buses, which corresponds to the natural array structure of the image. Hence, for the preferred embodiment discussed herein the data bus is divided into N data sub-buses, where N equals 16, and the data bus itself is D = 128 bit lines wide.

An image processing module must support multiple asynchronous simultaneous processes. This means that multiple independent process masters should be able to control the movement of different data streams at the same time. The bus is designed to allow a maximum of 16 simultaneous video processes, each of which is able to transfer data on at least one video data sub-bus. This constitutes a spatial multiplexing of the video data sub-buses. Since it is impractical to implement 16 address buses, one for each possible process, the architecture of this system uses a time multiplexed video address bus, having 24 lines in the preferred embodiment.

In order to fully utilize the throughput of the data path, each video address accesses a 16 pixel packet. This is also convenient for memory design. Although each 16 pixel data transfer takes 16 clock cycles, an address is asserted during only 1 clock cycle. Therefore, 16 pixels of data on each video data bus can be transferred with all 16 possible process masters having asserted their respective video addresses. In the system of the present invention, no bus arbitration is necessary because the throughput of the address bus exactly matches that of the data buses. The various process masters are assigned fixed time slots during which to assert the video addresses. A video data bus which is initialized for a read or write operation at the beginning of a process will perform the same operation repeatedly, until a whole array is transferred. The only dynamic control is on writing individual words in the packet. This is done by means of 16 write enable lines, one for each data bus, on which write enable risk signals are transferred serially with each word. This allows conditional updating of only certain words in an array. In this image processing system, the memory consists of storage arrays, each of which can be simultaneously accessed through multiple channels. Therefore, in a memory access both the address in the array and the access channel must be specified. The same memory address can be simultaneously accessed by several processes through respective different channels.

In addition to the address and data lines, there are 2 timing clocks, 19 video control signals and 34 collision protection signals. the allocation of the N sub-buses is executable under software control. Each process can be allocated to one or several data sub-buses as required to match its specific data throughput requirements. The processes which perform both memory read and memory write operations are allocated to separate read and write buses, thus eliminating the dead time inherent in a read-to-write transition. An address receiver, usually a memory board, latches the address at the end of the time slot. This concept minimizes the number of lines needed to address data for all of the N data sub-buses. Each address accesses N words, which are transferred serially, one word per clock cycle, on the corresponding data sub-bus. The N words accessed with one address are called a packet. Utilizing this packet design, it takes the same amount of time, N clock cycles, to transfer all data packets as it takes to address all N data buses. This enables full time use of both the address and the data lines with no dead time. Furthermore, the time, N clock cycles, to access each memory module is increased. This permits the use of slower, less expensive memories and/or increased performance via multiple accesses to the memory, multiporting, during a packet time. Up to N simultaneous data transfers, read or write, can be performed without the need for data or address arbitration. The number of read and write transfers is optimized in N steps to suit a particular application. Data can be fetched and returns to memory in parallel on different sub-buses without the need for local memory. This provides the optimum data path structure for pipeline processors. Data bus lines D can be subdivided into various word sizes in D/N increments.

The interfacing to the bus is relatively simple. The timing is fully synchronous for data, address and control signals. Data buses and address time slots are allocated by the system software, thereby eliminating the need for a request/arbitration/grant cycle. The timing of data transfers is fixed with respect to each packet clock, thereby eliminating the need for an acknowledge phase.

DESCRIPTION OF FIGURE 1

Figure 1 is a block diagram of a digital image processing apparatus showing an environment in which the video bus apparatus of the present invention may be used. The central part of the system is the bus 20. As described earlier, there are 128 data bit lines, 24 address bits lines, 19 video control signals, 34 collision protection signals, 2 timing clocks, and in addition a VME bus structure, conventional in itself for intercommunicating various control signals between the respective stations at a bit rate that is low compared to the video bit rate. The detailing of the bus apparatus to the level of bit lines has been omitted for brevity; interfacing to bus bit lines is well known in the art. Instead of the VME bus, other bus structures may be used for the inter-station control.

The apparatus in question has eleven stations; however other numbers of stations or other station categories could be useful. On input 22 image data are input, for example from a medical imaging apparatus on NMR, X-ray transmission or other technological principle. Element 24 is a quality colour monitor used to display the image as received from the input system, not shown, which is connected to input 22. Bidirectional connection 26 is connected to a recorder for storing images as received. This may be a magnetic or optical recorder, write-once or erasable. Element 28 is an interface control unit for a picture that is organized as an array for 512 x 512 pixels of 8 or 16 bits each. The pixels may contain intensity and/or colour information, which colour may be natural or false colour. The pictures may relate to medical information, but alternatively to geophysical data, still pictures for animation processing, or otherwise. Element 30 is a 4 Mbyte matrix memory, that may store completely one picture (each pixel as two bytes). If the data width of a pixel is reduced, this memory may contain more pictures. Connection 32 is for attaching a host computer for controlling the respective further stations for executing selected operations on selected pictures. For brevity, the nature of such picture processing is not described further. Element 34 is the system controller station for interfacing the host computer to the control part of the system bus. Alternatively, the host computer may also be used for executing certain picture processing operations. Element 36 is a high speed special purpose processor, specifically for executing a limited repertoire of picture manipulation algorithms. Elements 38, 40, 42 are 1 megabyte random access memories. In comparison with memory 30, they may either be used for storing a 512 x 512 picture of only four bits per pixel, or for storing a smaller picture of more bits per pixel. Still further, they may be used for storing a larger picture (e.g. 1024 x 1024 bits) of only one bit per pixel. Certain techniques have been described to exchange a certain extent pixel definition in the colour/intensity domain versus pixel definition in the spatial domain. Element 44 is a storage controller for interfacing work file apparatus 46 to the system bus. The work file apparatus may be used for archival purposes, or for storing indexing and other retrieveal information relating to the pictures stored via connection 26. Elements 48, 50 are video controllers for a 1024 x 1024 picture to be displayed on high resolution monitors 52 or 54. The display may consist of a single 1024 x 1024 picture, or of multiple pictures side by side of smaller dimensions, together constituting at most a 1 Mpixel image. Element 56 is a further station that may have one of several identities, similar to other stations shown. As indicated, the respective stations have a unidirectional or bidirectional connection with the system bus 20. The bidirectional connections may operate according to a half-duplex principle on the level of a picture in that a picture is first read from the station and rewritten thereafter. In that case one of the sixteen sub-buses need to be used by the station in question. If the operation is full-duplex on the level of a picture, the traffic in question may use two sub-buses. Thus, the configuration as shown roughly corresponds to the maximum throughput realizable with sixteen sub-buses.

## DETAILED DESCRIPTION OF THE BUS STRUCTURE AND PROTOCOL

Hereinafter, a typical embodiment of the bus structure and protocoal are given for D = 128 data bit lines, sixteen sub-buses (N = 16) and A = 24 address bits.

## SIGNALS

The data carries the following signals:
- video data buses (16) [VDAT]
- video address bus [VADD]
- video control signals [VCHNO, VADDVAL, WE]
- timing signals [BSYSCK, BPACKETCK]
- collision protection signals [GINVD, GOUTVD, GINVADD, CNOUTVADD]

## VIDEO DATA BUSES

Typically, data is transferred via sixteen 8-bit video data buses:
VDAT0-0...VDAT0-7 Video data bus 0, bits 0 to 7, etc. ... to
VDAT15-0...VDAT15-7 Video data bus 15, bits 0 to 7.
The signals are TTL negative-true.

## VIDEO ADDRESS BUS

Transfer addresses are asserted by process masters on the video address bus:
VADD4...VADD27
The 24 video address lines represent the most significant bits of the 28-bit address space. The least significant four bits are not physically implemented because each video address accesses not a word but a 16-word packet. The numeration of the video address lines starting from 4 instead of 0 emphasizes this fact.
The signals are TTL, negative-true.

## VIDEO CONTROL BUS

## VIDEO CHANNEL NUMBER

VCHNO 0
Video channel number lines. Together with the
VCHNO 1
the address they define the memory board and the channel to which a particular video access request was addressed.
VADDVAL
Video address valid, asserted by transfer masters during the time slots when they issue an address.
WE0...WE15
Word write enable, one for each data sub-bus. Defines which words transferred on the bus are to be stored (written) in the memory. The write enable signals are transferred serially, in parallel with the corresponding data words (in total 19 video control signals).
VCON0...VCON1
Reserved for future control functions (such as expansion of channels/board).

## TIMING SIGNALS

The data bus is synchronous. All info signals changes occur after the leading edge of the system clock and are guaranteed to reach the new state 10 ns before the next leading edge of the system clock is received.

The other timing characteristics of the data bus is the packet organization. All the events are referenced to a "packet clock", occurring every 16th clock cycle.

The timing signals associated with the VIDEO BUS are:

| | |
|---|---|
| BSYSCK | System clock: Has a frequency of 9.072 MHz for 60 Hz systems and 9.000 MHz for 50 Hz systems. It is an ECL signal distributed via a 50-Ohm line terminated at both ends of the line. |
| PACKETCK | Pacekt clock: TTL negative true signal generated once every 16 SYSCK* pulses. |

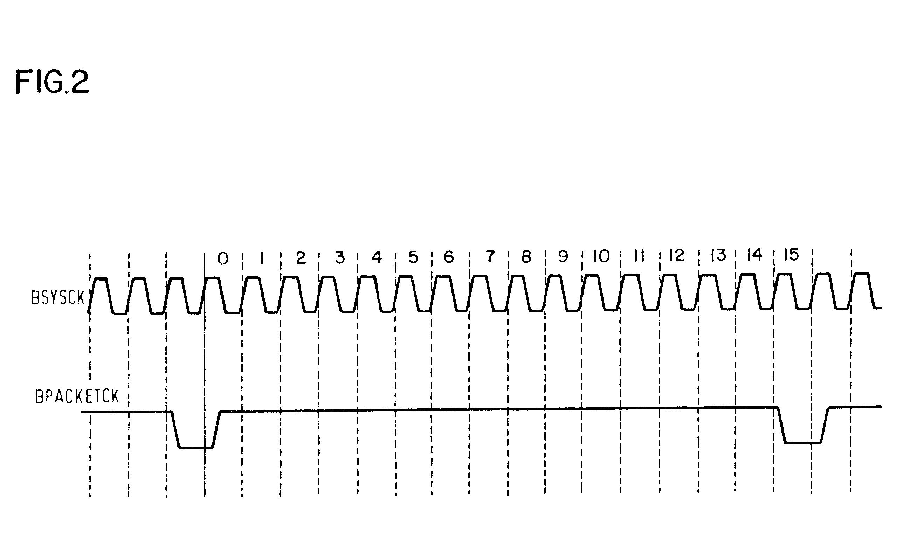

The relationship between BSYSCK* and PACKETCK* is shown in Figure 2; thus, there are two timing signals.

## COLLISION PROTECTION MECHANISM

Because of the complex multi-sub-bus, multi-master, simultaneous processing, the danger exists that two devices could simultaneously try to access the same sub-bus. To handle such a situation, a collision protection mechanism is used. It consists of seventeen daisy chain organizations (one for each video data sub-bus and one more for the video address bus). Each station has up to seventeen "Grant out" connections and as many "Grant in" connections which pairwise correspond to a data/address (sub)bus, and which are daisy chained along the stations. For brevity, no further specifics are given on the priority levels of the respective stations with respect to the respective (sub)-buses.

When a station (board) wants to drive a particular (sub)bus, it asserts an "Output request signal" to a collision protect circuit on the same board, specifying the intended target (sub)bus, one clock cycle before the actual transfer is intended. This action will drive the "Grant out" signal for the particular (sub)bus high, and which is chained along the stations with lower priority, thereby inhibiting those lower priority stations from driving the particular (sub)bus. If, upon the next clock cycle the "Grant in" signal for the particular (sub)bus is low, this signals that no higher priority station had also intended to drive the (sub)bus in question, and then the output drivers of the originating station will be enabled. On the other hand, if the "Grant in" signal is high, the "Grant out" signal will be high also and the output drivers in the station in question will not be enabled. Thus, in each station the signals used for collision protection are the following:

GINVD0...GINVD15

Grant in for video data sub-buses 0...15

GOUTVD0...GOUTVD15

Grant out for video data sub-buses 0...15

GINVADD

Grant in for video address bus

GOUTVADD

Grant out for video address bus.

## TIMING AND PROTOCOL

Timing of the data bus is governed by 2 periodical signals, the system clock BSYSCK and the packet clock BPACKETCK. The duration of a system clock period is also called a time slot. For ease of referencing, the sixteen time slots (between any 2 packet clocks) are labeled from 0 to 15 (Figure 2). This is an arbitrary notation without any special significance regarding the address or data packets. The important factor is that the address, write data, and read data packets have a fixed timing with respect to the packet clock.

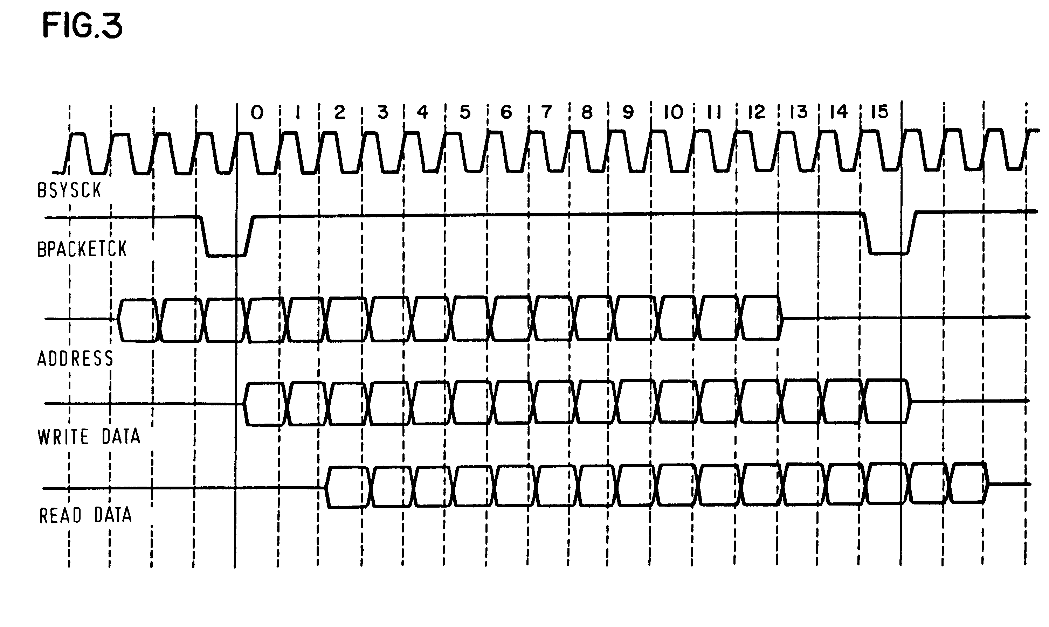

The address packet starts 2 time slots before the (buffered) packet clock. The write data packet starts one time slot after the buffered packet clock. The read data packet starts 3 time slots after the buffered packet clock. This is illustrated in Figure 3.

The data buses and address time slots are dynamically allocated before the transfer by the system software.

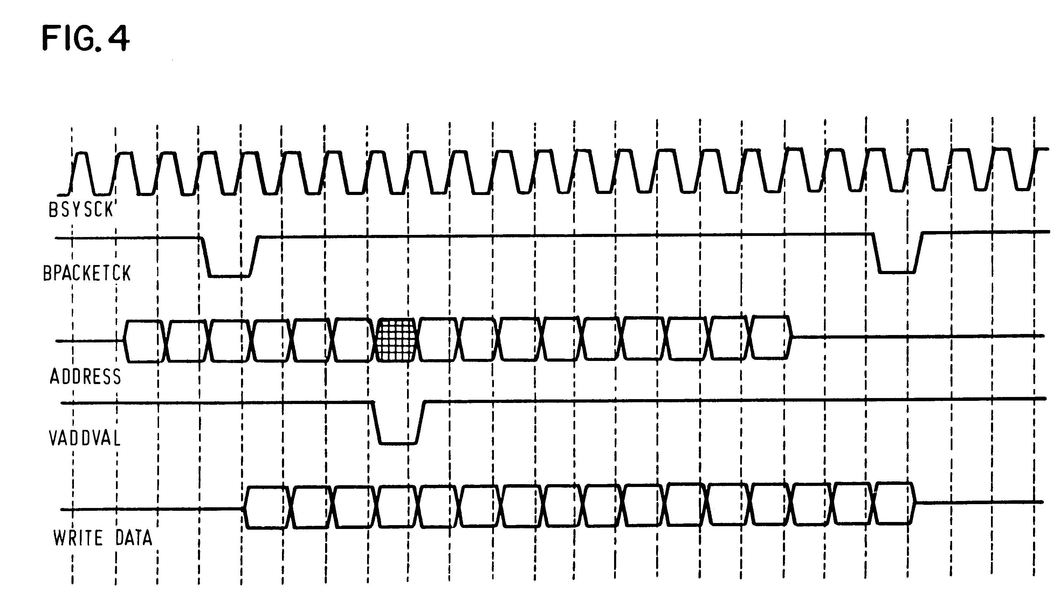

The timing of a write transfer (Figure 4) is as follows:

The master station monitors the packet clock and determines the start of an address packet. Then three system clock cycles later, it starts shifting out the data and "write enable" signals to the allocated bus(es). At the same time, the master waits for any (one or more) time slot allocated to it. In each allocated time slot this particular master station may output one address. In the present example only one address is output as indicated by the address validation signal VADDVAL and the cross-hatching of the address signal. The above is the whole write transfer protocol. The unusual characteristic of it is the timing of address sending which is decoupled from the start of data transfer. In many instances the address can be validated after the data starts being transferred, as opposed to all "classic" buses where the sequence of arbitration/address/data/acknowledge is mandatory. At the receiving units, this data is latched whether it is to be used or not. The data enters a shift register (or other buffer device) where it is retained until the destination address arrives. Then the receiving device makes its decision to use or discard the data in the shift register buffer. This decision is made before the end of the packet transfer (note the advance of the address cycle with respect to the data packet by three clock periods). The actual implementation of this protocol is simpler than that for the "classic" buses because of the fixed, synchronous nature of the bus and because of the absence of arbitration and acknowledge phases of the transfer cycle.

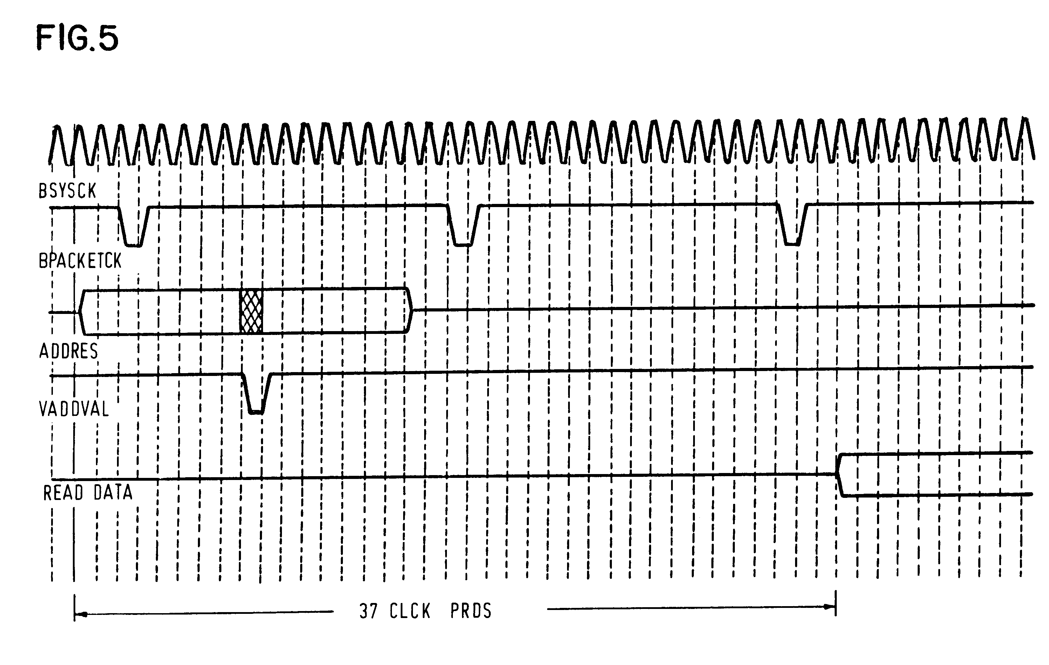

The only difference between the read transfer (Figure 5) and the write transfer is in the time of data transfer. In this case, since the data comes from a slave device (usually the memory), the address has to be asserted first and enough time has to be allowed for the data to be accessed in the pipelined memory. Here again, the start of the data packet is fixed not with respect to the time slot in which the address was asserted, but with respect to the start of the address packet. In the present example, the address is sent and validated during the address packet which starts at clock period "0" as indicated by the validation signal VADDVAL and the cross-hatching of the address period. In this case, the data starts coming at clock 37 (or 2 address packets and 5 clocks later).

As can be seen from the foregoing discussion, the data bus is divided into N sub-buses. This permits an independent path to be allocated for each process, from 1 to N processes. No process arbitration is needed. Each process may be allocated to one or several sub-buses as required to match its specific data throughput requirements. Thus, the data bus is spatially multiplexed. Processes which perform both memory read and memory write may be allocated to separate read and write sub-buses, thereby eliminating the dead time inherent in a write-to-read transition.

The addresses of all data sub-buses are time multiplexed on the address bus. Each sub-bus address is transferred during a different clock cycle or time slot. Typically, the address receiver latches the address at the end of the time slot. This minimizes the number of lines needed to address data for all of the N sub-buses.

Each address accesses up to N words, which are transferred serially one word per clock cycle on the corresponding data sub-bus. The N words accessed with one address are called a packet. It takes the same amount of time, N clock cycles, to transfer all data packets as it takes to address all N data buses. This enables full-time use of both the address and the data lines with no dead times.

## Claims

1.  An intercommunication bus apparatus for use in an image processing apparatus, connected to a plurality of device stations, wherein the bus apparatus comprises:
    - D data lines for the transfer of data, said data lines constituting a data bus, said data bus being divided into N sub-buses;
    - A address lines for addressing data in said device stations;
    - V video control lines for video control signals;
    - C collision protection lines for collision protection signals;
    - a system clock defining time slots for timing system operations;
    - means to allocate said sub-buses to from 1 to N processes, such that each process has an independent data path having one or more sub-buses, depending on the throughput requirements of the process;

    characterized in that the bus apparatus further comprises:
    - a packet clock defining multiples of N system clock cycles as time slots for data transfer;
    - means to time-multiplex the addresses of said data sub-buses on said address bus such that each sub-bus address is transferred during a different system clock cycle;

    wherein each of said addresses holds for a data packet comprising N words which are transferred serially in a predetermined phase relative to the packet clock, one word per system clock cycle being transferred on the allocated data sub-bus; said N words for which one address holds being a data packet.

2.  The intercommunication bus appartus of Claim 1 wherein a device capable of receiving data on a sub-bus further comprises a buffer for intermediately storing data received from said bus during any time slot which occurs during the packet slot prior to the time slot in which address information is transmitted for said device.

3.  The intercommunication bus apparatus of Claim 1 or 2 in which said D data lines can be subdivided into various words increments of D/N data lines.

4.  The intercommunication bus apparatus of Claim 1, 2 or 3 wherein there are D/N data sub-buses and the number of processes which can utilize said bus ranges from 1 to N.

5.  The intercommunication bus apparatus of Claim 1, 2, 3, or 4 wherein the length of packet is N words for N sub-buses of D/N data lines each.

6.  The intercommunication bus apparatus according to any of the claims 1 to 5, characterized in that it comprises means for allocating read and write processes to separate read and write data sub-busses.

7.  The intercommunication bus apparatus according to Claim 6, characterized in that the means to allocate sub-busses and processes is under control of software.

## Revendications

1.  Appareil à bus d'intercommunication à utiliser dans un appareil de traitement d'images connecté à une pluralité de postes, l'appareil à bus comprenant :
    - D lignes de données pour le transfert de données, ces lignes de données constituant un bus de données, le bus de données étant divisé en N sous-bus;
    - A lignes d'adresses pour adresser des données dans lesdits postes;
    - V lignes de commande vidéo pour des signaux de commande vidéo;
    - C lignes de protection contre les collisions pour des signaux de protection contre les collisions;
    - une horloge de système définissant des tranches de temps pour des opérations du système de gestion temporelle;
    - des moyens pour attribuer les sous-bus à 1 à N processus, pour que chaque processus dispose d'un trajet de données indépendant comprenant un ou plusieurs sous-bus, suivant les exigences de débit du processus,

caractérisé en ce qu'il comprend, en outre :

- une horloge de paquets définissant des multiples de N cycles d'horloge de système en tant que tranches de temps pour le transfert de données;
- des moyens pour multiplexer dans le temps les adresses des sous-bus de données sur le bus d'adresses, de telle sorte que chaque adresse de sous-bus soit transférée pendant un cycle d'horloge de système différent;

où chacune des adresses est valable pour un paquet de données comprenant N mots qui sont transférés en série dans une phase prédéterminée par rapport à l'horloge de paquets, un mot par cycle d'horloge de système étant transféré sur le sous-bus de données attribué; les N mots pour lesquels une adresse est valable formant un paquet de données.

2. Appareil à bus d'intercommunication suivant la revendication 1, dans lequel un dispositif capable de recevoir des données sur un sous-bus comprend, en outre, un tampon pour stocker temporairement des données reçues du bus pendant une quelconque tranche de temps qui se présente au cours de la tranche de temps précédant celle dans laquelle de l'information d'adresse est transmise pour le dispositif.

3. Appareil à bus d'intercommunication suivant la revendication 1 ou 2, dans lequel les D lignes de données peuvent être subdivisées en divers incréments de mots de D/N lignes de données.

4. Appareil à bus d'intercommunication suivant la revendication 1, 2 ou 3, dans lequel D/N sous-bus de données sont prévus et le nombre de processus pouvant utiliser le bus va de 1 à N.

5. Appareil à bus d'intercommunication suivant la revendication 1, 2, 3 ou 4, dans lequel la longueur du paquet est de N mots pour N sous-bus de D/N lignes de données chacun.

6. Appareil à bus d'intercommunication suivant l'une quelconque des revendications 1 à 5, caractérisé en ce qu'il comprend des moyens pour affecter des processus de lecture et d'écriture à des sous-bus de données de lecture et d'écriture séparés.

7. Appareil à bus d'intercommunication suivant la revendication 6, caractérisé en ce que les moyens destinés à l'affectation des sous-bus et des processus est sous la commande d'un logiciel.

**Patentansprüche**

1. Interkommunikationsbusapparat zur Verwendung in einem Bildbearbeitungsgerät, das an eine Anzahl von Gerätestationen angeschlossen ist, worin der Busapparat folgende Elemente enthält:

- D-Datenleitungen zum Übertragen von Daten, und diese Leitungen bilden einen Datenbus, der in N Unterbusse unterteilt ist;
- A-Adreßleitungen zum Adressieren von Daten in den Gerätestationen;
- V-Videosteuerleitungen für Videosteuersignale;
- C-Aufprallschutzleitungen für Aufprallschutzsignale;
- eine Systemuhr zum Bestimmen von Taktzellen zum Takten von Systemoperationen;
- Mittel zum derartigen Zuordnen der Unterbusse zu von 1 bis N Prozessen, daß jeder Prozeß über einen unabhängigen Datenweg mit einem oder mehreren Unterbussen verfügt in Abhängigkeit von den Durchflußbedingungen des Prozesses;

dadurch gekennzeichnet, daß das Busgerät weiter noch nachstehende Elemente enthält:

- eine Paketuhr zum Bestimmen von Vielfachen von N Systemuhrzyklen als Zeitkanälen zum Übertragen von Daten;
- Mittel zum derartigen Zeitmultiplexen der Adressen der Datenunterbusse am Adreßbus, daß jede Unterbusadresse in einem anderen Systemuhrzyklus übertragen wird;

wobei jede Adresse für ein Datenpaket mit N Wörtern geeignet ist, die in einer vorgegebenen Phase in bezug auf die Paketuhr serienweise übertragen werden, ein Wort pro Systemuhrzyklus auf den zugeordneten Datenunterbus übertragen wird und die N Wörter, für die eine einzige Adresse sich eignet, ein Datenpaket ist.

2. Interkommunikationsbusapparat nach Anspruch 1, worin ein an einem Unterbus datenempfangfähiges Gerät außerdem einen Pufferspeicher zum direkten Speichern von in einem Zeitkanal aus dem Bus empfangenen Daten enthält, wobei dieser Zeitkanal während des Paketkanals vor dem Zeitkanal erscheint, in dem für dieses Gerät Adreßinformation übertragen wird.

3. Interkommunikationsbusapparat nach Anspruch 1 oder 2, worin die D Datenleitungen in unterschiedliche Worterhöhungen von D/H-Datenleitungen unterteilbar sind.

4. Interkommunikationsbusapparat nach Anspruch 1, 2 oder 3, worin es D/N-Datenunterbusse gibt und die Anzahl von Prozessen, die den Bus verwenden können, im Bereich von 1 bis N liegt.

5. Interkommunikationsbusapparat nach Anspruch 1, 2, 3 oder 4, worin die Paketlänge je N Wörter für N Unterbusse von D/N-Datenleitungen beträgt.

6. Interkommunikationsbusapparat nach einem der Ansprüche 1 bis 5, dadurch gekennzeichnet, daß der Apparat Mittel zum Zuordnen von Auslese-und Schreibprozessen zu getrennten Auslese- und Schreibdatenunterbussen enthält.

7. Interkommunikationsbusapparat nach Anspruch 6, dadurch gekennzeichnet, daß das Mittel zum Zuordnen von Unterbussen und Prozessen von Software gesteuert wird.

FIG. 1

## FIG.2

# FIG.3

BSYSCK

BPACKETCK

ADDRESS

WRITE DATA

READ DATA

EP 0 188 828 B1

# FIG. 4

BSYSCK

BPACKETCK

ADDRESS

VADDVAL

WRITE DATA

EP 0 188 828 B1

# FIG.5

BSYSCK

BPACKETCK

ADDRES

VADDVAL

READ DATA

37 CLCK PRDS

EP 0 188 828 B1